# EUROPÄISCHE PATENTSCHRIFT

(11) **EP 2 697 658 B1**
(45) Veröffentlichungstag und Bekanntmachung des Hinweises auf die Patenterteilung: **03.10.2018**
(21) Anmeldenummer: 12704044.2
(22) Anmeldetag: 09.02.2012
(51) Int. Cl.: G01P 13/00, G01P 3/46, G01P 3/48, H02P 9/08

(54) **VERFAHREN ZUR ERFASSUNG EINER DREHUNG EINES ROTORS EINES GENERATORS**
METHOD FOR DETECTING A ROTATION OF A ROTOR OF A GENERATOR
PROCÉDÉ POUR DÉTECTER LA ROTATION DU ROTOR D'UN GÉNÉRATEUR

(30) Priorität: 13.04.2011 DE 102011007331
(43) Veröffentlichungstag der Anmeldung: 19.02.2014
(73) Patentinhaber: SEG Automotive Germany GmbH, 70499 Stuttgart (DE)
(72) Erfinder: KOSS, Thomas, 72768 Reutlingen (DE); ENGBER, Arnold, 63768 Hoesbach (DE)
(74) Vertreter: Steinbauer, Florian
(86) Internationale Anmeldenummer: PCT/EP2012/052204
(87) Internationale Veröffentlichungsnummer: WO 2012/139786

(56) Entgegenhaltungen:
- DE-A1- 1 463 599
- DE-A1- 19 611 908
- DE-A1- 19 732 961
- DE-A1-102009 029 527
- US-B1- 6 396 247

## Beschreibung

Zur Erfassung einer Drehung oder einer Drehgeschwindigkeit eines Rotors eines Generators sowie für einen Neustart des Generators wird üblicherweise ein Phasensignal, beispielsweise eine Phasenspannung, an einem Phasenabgriff des Generators gemessen. Um einen Wechselanteil des Phasensignals bestimmen zu können, ist jedoch eine auswertbare Amplitude erforderlich, welche sich jedoch erst bei höheren Drehzahlen einstellt.

Der Notstart des Generators soll für den Fall, dass keine Kommunikation zwischen einem übergeordnetem Steuergerät und einem Regler, der den Generator ansteuert, stattfindet, den Regler aktivieren. Hierzu wird üblicherweise ein Wechselanteil des Phasensignals ausgewertet, der sich aufgrund der im Rotor des Generators vorhandenen Remanenz und der Drehung des Rotors ausbildet. Abhängig von der Remanenz und der Bauweise des Generators erreicht der Wechselanteil jedoch erst bei hohen Drehzahlen eine auswertbare Amplitude. Um eine frühzeitige Aktivierung des Reglers darzustellen, muss die Auswertung des Phasensignals daher entsprechend empfindlich ausgeführt werden. Dies ist jedoch aufwendig und reduziert die Robustheit des Reglers gegenüber Störungen.

Zur Erhöhung der Empfindlichkeit einer Phasensignalauswertung schlägt die DE 43 27 485 A1 einen Schaltungsanordnung vor, bei welcher die Spannung einer Phase gegen die Masse erfasst und eine weitere Phase des Generators über einen Widerstand auf Masse geschaltet wird. Dadurch wird die gemessene Spannung erhöht.

DE 196 11 908 A1 offenbart eine Vorrichtung und ein Verfahren zur Erzeugung einer geregelten Spannung mit einem fremderregten Generator, bei dem der Generator lediglich einen B -+-Anschluss (B+) und einen D-Minus-Anschluss (D-) aufweist, der auf Masse liegt, wobei der Spannungsregler und das Bordnetz an diesen beiden Anschlüssen angeschlossen sind. Die Erregerwicklung des Generators ist mittels eines Transistors zwischen B+ und Masse schaltbar. Die Ansteuerung des Transistors beginnt, sobald der Spannungsregler den Start der Brennkraftmaschine erkannt hat, dabei kann die Starterkennung nach verschiedenen Varianten erfolgen. Nachdem die Vollerregung des Generators erkannt ist, wird auf en üblichen Regelbetrieb übergegangen.

US 6,396,247 B1 offenbart eine Reglerauswahleinrichtung, zur Auswahl zwischen einem automatischen und einem manuellen Reglerbetrieb zur Regelung des Erregerfeldes einer Erregerspule in einem Synchrongenerator, wobei die Einrichtung eine Schaltlogik aufweist, die ein versehentliches Schalten zwischen dem automatischen und dem manuellen Regelbetrieb verhindert.

DE 14 63 599 offenbart einen selbsterregten Wechselspannungsgenerator, bei dem zur Einleitung der Erregung die erforderliche Reminiszenzspannung durch eine entsprechende Einrichtung bereitgestellt wird.

Es ist Aufgabe der vorliegenden Erfindung, ein Konzept zur effizienten Erfassung einer Drehung eines Rotors eines Generators zu schaffen.

Diese Aufgabe wird durch die Merkmale der unabhängigen Ansprüche gelöst. Vorteilhafte Weiterbildungsformen sind Gegenstand der Unteransprüche.

### Offenbarung der Erfindung

Die Erfindung basiert auf der Erkenntnis, dass eine Drehbewegung eines Rotors eines Generators effizient durch eine Auswertung einer Erregerspannung im oder am Erregerkreis des Generators erfasst werden kann. Denn ein Spannungshub der Erregerspannung ist höher als ein Hub des Phasensignals, was eine genauere und vorteilhafte Spannungserfassung und somit eine genauere Erfassung der Drehbewegung ermöglicht.

Gemäß einem Aspekt betrifft die Erfindung ein Verfahren zur Erfassung einer Drehung eines Rotors eines Generators, mit Messen einer Erregerspannung in oder an einem Erregerkreis des Generators, und Erfassen der Drehung des Rotors anhand der gemessenen Erregerspannung. Dadurch wird in vorteilhafter Weise erreicht, dass bereits bei geringen Drehgeschwindigkeiten ein Signal und damit eine Drehbewegung des Rotors effizient erfasst werden können. Denn die Sensitivität der Erfassung der Drehbewegung ist gegenüber einem Phasenabgriff in vorteilhafter deutlich erhöht.

Gemäß einer vorteilhaften Ausführungsform kann der Wechselanteil der Erregerspannung gemessen werden. Das Messen des Wechselanteils erlaubt eine besonders genaue Erkennung einer Drehbewegung des Rotors.

Gemäß einer vorteilhaften Ausführungsform wird die Drehung des Rotors nur dann erfasst, wenn die gemessene Erregerspannung einen vorbestimmten Wert überschreitet. Dadurch wird in vorteilhafter Weise eine Verbesserung der Meßzuverlässigkeit erreicht.

Gemäß einer vorteilhaften Ausführungsform umfasst der Generator einen Regler zur Regelung einer Generatorspannung, wobei der Regler in einen aktiven Zustand und in einen inaktiven Zustand, insbesondere in einem Stand-By Modus, versetzbar ist, wobei die Erregerspannung in dem inaktiven Zustand erfasst wird. Dadurch kann die Drehung des Rotors besonders genau erfasst werden.

Gemäß einer vorteilhaften Ausführungsform wird in dem aktiven Zustand eine Phasenspannung an einem Phasenanschluss des Generators gemessen, wobei die Drehung des Rotors in dem aktiven Zustand optional anhand der gemessenen Phasenspannung erfasst werden kann. Dadurch kann die Drehung des Rotors in besonders vorteilhafter Weise auch dann erfasst werden, wenn die Erregerspannung nicht auswertbar ist.

Gemäß einer vorteilhaften Ausführungsform ist der Regler aktivierbar, insbesondere mittels einer Kundenschnittstelle aktivierbar. Dadurch wird in besonders vorteilhafter Weise eine flexible Aktivierung des Reglers ermöglicht.

Gemäß einer vorteilhaften Ausführungsform wird der Regler bei erfasster Drehung des Rotors in den aktiven Zustand versetzt.

Gemäß einer vorteilhaften Ausführungsform wird die Erregerspannung über einem Ableitwiderstand des Erregerkreises gemessen. Dadurch kann die Erregerspannung auf besonders einfacher Weise gemessen werden.

Gemäß einer vorteilhaften Ausführungsform wird die Drehung des Rotors des Generators bei Notstart anhand der Erregerspannung erfasst. Dadurch kann die Drehung des Rotors in besonders vorteilhafter Weise auch dann erfasst werden, wenn die Erregerspannung nicht auswertbar ist. Wird daraufhin der Regler aktiviert, so kann die Drehung anhand einer Phasenspannung an einem Phasenanschluss des Generators erfasst werden.

Gemäß einem weiteren Aspekt betrifft die Erfindung ein Steuergerät, das ausgebildet ist, das Verfahren zur Erfassung einer Drehung eines Rotors eines Generators auszuführen. Das Steuergerät kann zur Ausführung des Verfahrens beispielsweise programmtechnisch eingerichtet sein.

### Kurze Beschreibung der Zeichnungen

Weitere Ausführungsbeispiele werden Bezug nehmend auf die beiliegenden Zeichnungen näher erläutert. Es zeigen:
Fig. 1 ein Diagramm eines Verfahrens zur Erfassung einer Drehung eines Rotors eines Generators;
Fig. 2 ein Ersatzschaltbild eines Erregerkreises; und
Fig. 3 beispielhafte Spannungsverläufe am Erregerkreis und am Phasenabgriff.

### Ausführungsformen der Erfindung

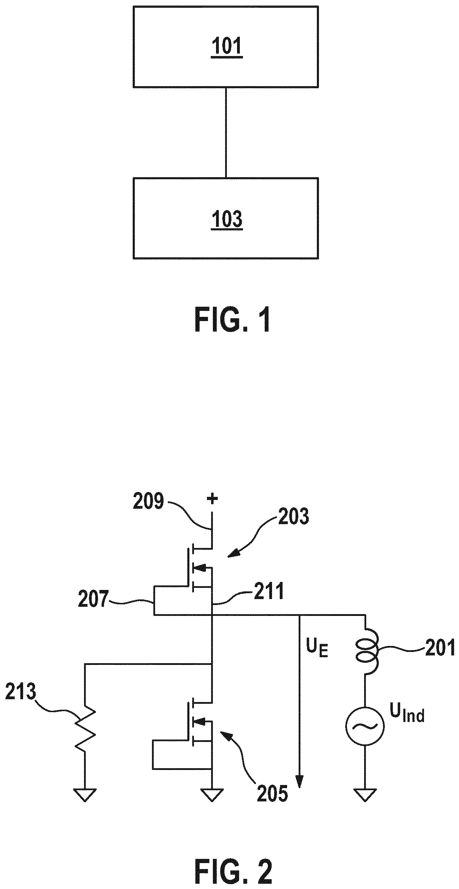

Fig. 1 zeigt ein Diagramm eines Verfahrens zur Erfassung einer Drehung eines Rotors eines Generators gemäß einer Ausführungsform. Das Verfahren umfasst Messen 101 einer Erregerspannung U_{E} an einem Erregerkreis des Generators und Erfassen 103 der Drehung des Rotors anhand der gemessenen Erregerspannung U_{E}.

Fig. 2 zeigt ein Ersatzschaltbild eines Erregerkreises in inaktivem Zustand, beispielweise in einem Stand-By-Zustand. Der Erregerkreis umfasst eine Rotorwicklung 201, einen Schalter 203, welcher beispielsweise als ein Feldeffekttransistorschalter ausgeführt sein kann, und eine Freilaufdiode 205, welche beispielsweise durch eine geeignete Verschaltung eines Feldeffekttransistorschalters ausgeführt sein kann. Ein Gate-Achschluss 207 des Schalters 203 ist über die Rotorwicklung 201 gegen ein Referenzpotential, beispielsweise Masse, geschaltet. Ein beispielsweise positives Aktivierungspotential ist an einen ersten Anschluss 209 des Schalters 203 anlegbar. Ein zweiter Anschluss 211 des Schalters 203 ist über die Freilaufdiode 205 mit dem Referenzpotential verbunden. Ferner ist ein Ableitwiderstand 213 vorgesehen, der mit dem zweiten Anschluß 211 und dem Referenzpotential verbunden ist.

Die Rotorwicklung 201 kann einen Induktivitätswert von 150 mH und einen Widerstandswert von 1.8 Ohm aufweisen.

Der Schalter 203 und die Freilaufdiode 205 sind Elemente eines Regler, welcher zur Regelung einer Spannung eines Generators in einen aktiven und in einen inaktiven Zustand geschaltet werden kann.

In inaktivem Zustand des Reglers sind der Schalter 203 und die Freilaufdiode 205 gesperrt. Der Erregerkreis ist von dem Aktivierungspotential getrennt. Dreht sich der Rotor, wird in der Rotorwicklung 201 eine Spannung U_{ind} induziert. Über den Ableitwiderstand 213 wird dann die entsprechende Erregerspannung U_{E} gemessen.

Der Gleichanteil der Erregerspannung U_{E} wird durch den Sperrstrom des Schalters 203 und der Freilaufdiode 205 bestimmt, ist aber aufgrund des geringen Widerstands des Erregerkreises selbst und des geringen Sperrstroms vernachlässigbar.

Der Wechselanteil der Erregerspannung U_{E} wird durch Freilaufdiode 205 auf einen vorbestimmten negativen Wert begrenzt. Beispielsweise kann die Erregerspannung auf -0,45 V begrenzt sein.

Im Notstartfall erfolgt die Aktivierung über die Auswertung der Erregerkreisspannung. Ist der Regler aktiviert, wird der Schalter 203 geschaltet. Die Spannung im Erregerkreis kann nun nicht mehr ausgewertet werden. Daher kann die Drehung bzw. die Drehzahl des Rotors im aktiven Modus aus der Phasenspannung ermittelt werden.

Ist der Regler aktiviert, so baut sich durch den Erregerstrom ein großer Wechselanteil im Phasensignal auf. Das Phasensignal kann daher in dem aktiven Modus des Reglers besonders mit einer deutlich geringeren Empfindlichkeit ausgewertet werden. Die Auswertung des Phasensignals kann daher deutlich einfacher und robuster gestaltet werden. Im inaktiven Modus des Reglers kann die Drehung des Rotors hingegen auf der Basis der gemessenen Erregerspannung erfasst werden. Dadurch kann der Regler-ASIC auf einer kleineren Fläche realisiert werden, was zu einer Kostenreduktion führt. Die Auswertung kann alternativ so gestaltet werden, dass eine Aktivierung bereits bei sehr geringen Drehzahlen erfolgt.

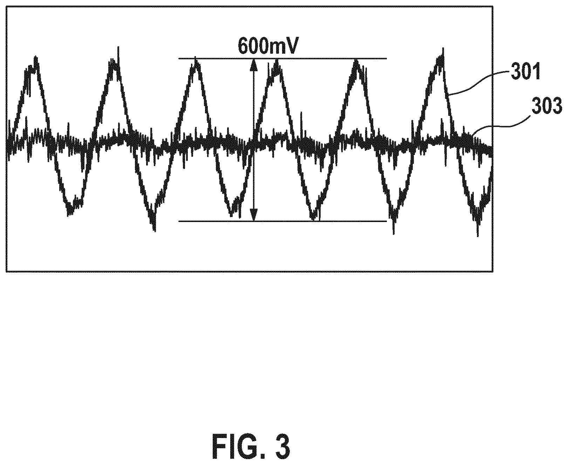

Fig. 3 zeigt eine typische gemessenen Erregerspannung 301 bei sich drehendem Rotor in inaktivem Zustand und zum Vergleich eine entsprechende Phasenspannung 303 an einem Phasenabgriff bei gleicher Drehgeschwindigkeit. Wie in Fig. 3 deutlich zu sehen ist, ist der Spannungshub der Erregerspannung 301 höher als der Spannungshub der Phasenspannung 303, was eine genauere Erfassung einer Drehung des Rotors ermöglicht.

Wird der Regler aktiviert, wird der Schalter 203 geschaltet. Der Erregerkreis wird dann durch das Aktivierungspotential in an sich bekannter Weise erregt. Die Drehbewegung kann in diesem Fall in üblicher Weise über den Phasenabgriff erfasst werden.

Normalerweise wird bei einer Aktivierung des Generators zunächst eine Erregerspannung angelegt und der Generator in den aktiven Zustand geschaltet.

In einer Notstartsituation, in der keine Aktivierung des Reglers durch ein externes Signal oder eine externe Spannung erfolgt, kann in einem erfindungsgemäßen Ausführungsbeispiel die Aktivierung des Reglers über eine Auswertung der Erregerkreisspannung erfolgen. Übersteigt die durch die Drehbewegung im Erregerkreis induzierte Erregerkreisspannung beispielsweise einen vorbestimmten Wert, beispielsweise 5% oder 10% des Spannungshubs, so wird der Regler aktiviert und der Schalter 203 geschaltet. Nach Aktivierung des Reglers kann die Spannung im Erregerkreis nicht mehr ausgewertet werden und die Drehzahl wird in üblicher Weise mittels Phasenangriff erfasst. Dies ist besonders vorteilhaft, weil bei kleinen Drehzahlen die Amplitude des Wechselanteils der Spannung über dem Erregerkreis deutlich größer als der Wechselanteil der Phasenspannung ist. Für den Notstart kann daher die Spannung über dem Erregerkreis ausgewertet werden, während für den aktiven Modus die Spannung am Phasenabgriff ausgewertet werden kann.

Die oben beschriebenen Beispiele sind nicht nur in Notstartsituationen einsetzbar, sondern können allgemein verwendet werden. So kann beispielsweise generell auf ein externes Signal zur Aktivierung verzichtet werden und der Generator durch die in dem Erregerkreis erfasste Spannung aktiviert werden.

## Patentansprüche

1. Verfahren zur Erfassung einer Drehung eines Rotors eines Generators mit einem Regler zur Regelung einer Generatorspannung, wobei der Regler in einen aktiven Zustand und in einen inaktiven Zustand, insbesondere in einem Stand-By-Modus, versetzbar ist, wobei im inaktiven Zustand ein Erregerkreis des Generators von einem Aktivierungspotential getrennt ist, wobei in dem inaktiven Zustand durch:
Messen (101) einer durch Drehung des Rotors induzierten Erregerspannung (U_{E}) in dem inaktiven Zustand
die Drehung des Rotors anhand der gemessenen induzierten Erregerspannung (U_{E}) erfasst (103) wird.

2. Verfahren nach Anspruch 1, wobei ein Wechselanteil der Erregerspannung (U_{E}) gemessen wird.

3. Verfahren nach Anspruch 1 oder 2, wobei das Erfassen (103) der Drehung des Rotors ein Ermitteln umfasst, ob die gemessene Erregerspannung (U_{E}) einen vorbestimmten Wert überschreitet.

4. Verfahren nach einem der vorangehenden Ansprüche, wobei in dem aktiven Zustand eine Phasenspannung an einem Phasenanschluss des Generators gemessen wird, und wobei die Drehung des Rotors in dem aktiven Zustand anhand der gemessenen Phasenspannung erfasst wird.

5. Verfahren nach einem der vorangehenden Ansprüche, wobei der Regler aktivierbar ist, insbesondere mittels einer Kundenschnittstelle aktivierbar ist.

6. Verfahren nach einem der vorangehenden Ansprüche, wobei der Regler bei erfasster Drehung des Rotors in den aktiven Zustand versetzt wird.

7. Verfahren nach einem der vorangehenden Ansprüche, wobei die Erregerspannung über einem Ableitwiderstand parallel zum Erregerkreis gemessen wird.

8. Verfahren nach einem der vorangehenden Ansprüche, wobei die Drehung des Rotors des Generators bei Notstart anhand der Erregerspannung erfasst wird.

9. Regler zur Regelung einer Generatorspannung, welcher in einen aktiven Zustand und in einen inaktiven Zustand versetzbar ist, mit Mitteln zum Erfassen einer Drehung eines Rotors eines Generators in dem inaktiven Zustand umfassend
- Mittel zum Messen (101) einer durch Drehung des Rotors induzierten Erregerspannung (U_{E}) und
- Mittel zum Erfassen der Drehung des Rotors anhand der gemessenen induzierten Erregerspannung (U_{E}).

## Claims

1. A method for detecting a rotation of a rotor of a generator with a controller for closed-loop control of a generator voltage, wherein the controller can be set to an active state and to an inactive state, in particular in a standby mode, wherein, in the inactive state, an excitation circuit of the generator is separated from an activation potential, wherein in the inactive state, by:
measuring (101) an excitation voltage (U_{E}), induced by rotation of the rotor, in the inactive state,
the rotation of the rotor is detected (103) on the basis of the measured induced excitation voltage (U_{E}).

2. The method according to claim 1, wherein an alternating component of the excitation voltage (U_{E}) is measured.

3. The method according to claim 1 or 2, wherein detecting (103) the rotation of the rotor comprises ascertaining whether the measured excitation voltage (U_{E}) exceeds a predetermined value.

4. The method according to any one of the preceding claims, wherein in the active state a phase voltage at a phase terminal of the generator is measured, and wherein the rotation of the rotor in the active state is detected on the basis of the measured phase voltage.

5. The method according to any one of the preceding claims, wherein the controller is able to be activated, in particular is able to be activated by means of a customer interface.

6. The method according to any one of the preceding claims, wherein the controller is set to the active state in the event that rotation of the rotor is detected.

7. The method according to any one of the preceding claims, wherein the excitation voltage is measured via a bleeder resistor parallel to the excitation circuit.

8. The method according to any one of the preceding claims, wherein the rotation of the rotor of the generator is detected in the event of an emergency start on the basis of the excitation voltage.

9. Controller for closed-loop control of a generator voltage, which can be set to an active state and to an inactive state, having means for detecting a rotation of a rotor of a generator in the inactive state comprising
- means for measuring (101) an excitation voltage (U_{E}), induced by rotation of the rotor, and
- means for detecting the rotation of the rotor on the basis of the measured induced excitation voltage (UE).

## Revendications

1. Procédé pour détecter une rotation d'un rotor d'un générateur avec un régulateur pour réguler une tension de générateur, dans lequel le régulateur peut être basculé vers un état actif et un état inactif, en particulier dans un mode d'attente, dans lequel, à l'état inactif, un circuit d'excitation du générateur est séparé d'un potentiel d'activation, dans lequel, à l'état inactif :
par une mesure (101) d'une tension d'excitation (U_{E}) induite par la rotation du rotor à l'état inactif,
la rotation du rotor est détectée (103) au moyen de la tension d'excitation (U_{E}) induite mesurée.

2. Procédé selon la revendication 1, dans lequel une composante alternative de la tension d'excitation (U_{E}) est mesurée.

3. Procédé selon la revendication 1 ou 2, dans lequel la détection (103) de la rotation du rotor comprend de déterminer si la tension d'excitation mesurée (U_{E}) franchit une valeur prédéfinie.

4. Procédé selon l'une des revendications précédentes, dans lequel, à l'état actif, une tension de phase est mesurée sur une borne de phase du générateur, et dans lequel la rotation du rotor est détectée à l'état actif au moyen de la tension de phase mesurée.

5. Procédé selon l'une des revendications précédentes, dans lequel le régulateur peut être activé, en particulier au moyen d'une interface client.

6. Procédé selon l'une des revendications précédentes, dans lequel le régulateur est basculé vers l'état actif lorsqu'une rotation du rotor est détectée.

7. Procédé selon l'une des revendications précédentes, dans lequel la tension d'excitation est mesurée par l'intermédiaire d'une résistance de fuite parallèle au circuit d'excitation.

8. Procédé selon l'une des revendications précédentes, dans lequel la rotation du rotor du générateur en cas de démarrage d'urgence est détectée au moyen de la tension d'excitation.

9. Régulateur pour réguler une tension de générateur, dans lequel le régulateur peut être basculé vers un état actif et un état inactif, comportant des moyens pour détecter une rotation d'un rotor d'un générateur dans l'état inactif comprenant
- des moyens de mesure (101) d'une tension d'excitation (U_{E}) induite par la rotation du rotor à l'état inactif,
- des moyens pour détecter la rotation du rotor au moyen de la tension d'excitation (U_{E}) induite mesurée.
